# EUROPEAN PATENT APPLICATION

(11) **EP 2 256 616 A2**
(43) Date of publication of application: **01.12.2010**
(21) Application number: 10157617.1
(22) Date of filing: 24.03.2010
(51) Int. Cl.: G06F 3/12

(54) **Network image forming apparatus and method of controlling printing thereof**

(30) Priority: 25.05.2009 KR 20090045673
(71) Applicant: Samsung Electronics Co., Ltd., Suwon-si, Gyeonggi-do (KR)
(72) Inventor: Jung, Joo-young, Gyeonggi-do (KR); Park, Dong-chae, Gyeonggi-do (KR); Kim, Gyong-ock, Gyeonggi-do (KR); Park, Eun-ok, Gyeonggi-do (KR); Ahn, Ho-jin, Gyeongsangnam-do (KR)
(74) Representative: Walaski, Jan Filip

(57) **Abstract**

A network image forming apparatus connectable to at least one host apparatus and a method of controlling printing thereof, including receiving a user defined color table generated using at least one host apparatus, and storing the received user defined color table in the network image forming apparatus such that the received user defined color table can be shared by more than one host apparatus connected to the network image forming apparatus, and performing a printing job using the stored user defined color table.

## Description

The present general inventive concept relates to a network image forming apparatus and a method of controlling printing thereof, and more particularly to a network image forming apparatus in which one or more user defined color tables are shared by a plurality of users and a method of controlling printing thereof.

Recently, one of the most popular functions provided by an image forming manufacturer is to allow a user to adjust and apply color directly. The user may use a color adjustment tool to adjust colors, and the adjusted colors are added to the driver of the image forming apparatus as a color theme. The user may select the added colors from a user interface (UI) of a driver to be used, and request printing using the colors. Accordingly, a user may print a document using a color theme that he or she wants. However, the above function is provided to each user, and thus the added color theme may be used only by the user who adjusted the colors and may not be shared by all the users who use a network image forming apparatus. Therefore, in order to use the same color theme, the users should create the same color theme individually, which may cause inconvenience to the users.

The present general inventive concept provides a network image forming apparatus in which one or more user defined color tables that will be applied consistently can be shared by a plurality of users and a method of controlling printing thereof.

Additional embodiments of the present general inventive concept will be set forth in part in the description which follows and, in part, will be obvious from the description, or may be learned by practice of the general inventive concept.

Example embodiments of the present general inventive concept may be achieved by providing a method of controlling printing in a network image forming apparatus which is capable of communicating with at least one host apparatus, including receiving a user defined color table generated by using the at least one host apparatus and storing the received user defined color table in the network image forming apparatus so that the received user defined color table can be shared by the at least one host apparatus, and performing a printing job using the stored user defined color table.

The method may further include generating the user defined color table from the at least one host apparatus according to a user's request and transmitting the generated user defined color table to the network image forming apparatus.

The storing may include storing the received user defined color table in a first memory of the network image forming apparatus, receiving a command to store the user defined color table stored in the first memory area in a second memory area of the network image forming apparatus and storing the user defined color table stored in the first memory area in the second memory area.

The command may occur if the network image forming apparatus is booted, if the new user defined color table is received, or if the at least one host apparatus makes a request for the printing job.

The method may include initializing the second memory area if a user defined color table stored in the first memory area is deleted, storing an initial color table pre-stored in the first memory area in the second memory area, and performing the printing job using an initial color table stored in the second memory area.

The first memory area and the second memory area may be the same storage media with different storage areas or different storage media.

A plurality of user defined color tables may be stored in the first memory area, and a selected user defined color table from among the stored plurality of user defined color tables may be stored in the second memory area.

The user defined color table may be generated using an initial color table pre-stored in the network image forming apparatus or a separate color table.

If the at least one host does not select a separate color table, the printing job may be performed using the user defined color table stored in the network image forming apparatus.

The printing job may include at least one of color-printing, color-scanning, color-copying, and transmitting color faxes.

Example embodiments of the present general inventive concept may also be achieved by providing a network image forming apparatus which is capable of communicating with at least one host apparatus, including a receiving unit to receive a user defined color table generated using the at least one host apparatus and a storage unit to store the received user defined color table so that the received user defined color table is shared by the at least one host apparatus, and a printing job is performed using the stored user defined color table.

The at least one host apparatus may include a table generation unit to generate the user defined color table from the at least one host apparatus according to a user's request and a communication unit to transmit the generated user defined color table to the network image forming apparatus.

The network image forming apparatus may further include a control unit to store the received user defined color table in the first memory area of the storage unit and store the user defined color table stored in the first memory area in the second memory are of the storage unit according to a command.

The command may occur if the network image forming apparatus is booted, if the new user defined color table is received, or if the at least one host apparatus makes a request for the printing job.

The control unit may clear the second memory area if the user defined color table stored in the first memory area is deleted and store an initial color table pre-stored in the first memory area in the second memory area.

Example embodiments of the present general inventive concept may also be achieved by providing a host apparatus, including a table generation unit to generate a user defined color table using an initial color table stored in a network image forming apparatus, a communication unit to transmit the generated table to the network image forming apparatus, and a user manipulation unit to select the user defined color table stored in the network image forming apparatus and to make a request for document work.

Example embodiments of the present general inventive concept may also be achieved by providing a method of controlling a printing operation of a network image forming apparatus, including storing an initial color table in a first memory of the network image forming apparatus, modifying the initial color table using a host apparatus connected to the network image forming apparatus, storing the modified color table in a second memory of the network image forming apparatus, and performing an image forming operation based on the modified color table using another host apparatus connected to the network image forming apparatus.

The method may further include creating a plurality of modified color tables from the initial color table using a plurality of host apparatuses connected to the network image forming apparatus, and selecting one of the plurality of modified color tables using at least one of the plurality of host apparatuses to perform the image forming operation.

Example embodiments of the present general inventive concept may also be achieved by providing a network image forming apparatus, including a storage unit having a first memory and a second memory, a transmit/receive unit to receive a command from a host apparatus connected to the network image forming apparatus to modify an initial color table stored in the first memory and to transmit the modified color table to the second memory, and a control unit to control a printing operation of the network image forming apparatus based on the modified color table in response to a print request from another host apparatus connected to the network image forming apparatus.

These and/or other embodiments of the present general inventive concept will become apparent and more readily appreciated from the following description of the embodiments, taken in conjunction with the accompanying drawings of which:
FIG. 1 is a view illustrating a network system including a network image forming apparatus according to an exemplary embodiment of the present general inventive concept;
FIG. 2 is a block diagram illustrating a first host apparatus and a first image forming apparatus according to an exemplary embodiment of the present general inventive concept;
FIG. 3 is an example of a user interface (UI) having a color adjustment tool displayed in the first host apparatus;
FIG. 4 is a view illustrating an example of generating a user defined color table from an initial color table;
FIG. 5A, FIG. 6A, and FIG. 7A are views illustrating an example of storing a user defined color table in a storage unit;
FIG. 5B, FIG. 6B, and FIG. 7B are views illustrating an example of storing a user defined color table in a second memory area;
FIG. 9 is a flow chart illustrating a method of generating a user defined color table in the first host apparatus according to an exemplary embodiment of the present general inventive concept; and
FIG. 10 to FIG. 12 are flow charts illustrating a method of controlling printing of the network image forming apparatus according to an exemplary embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

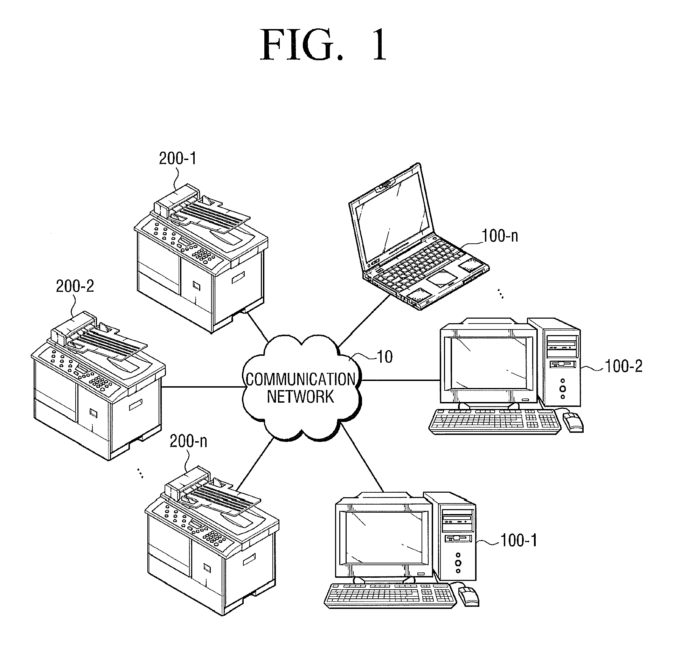

FIG. 1 is a view illustrating a network system to which a network image forming apparatus can be applied according to an exemplary embodiment of the present general inventive concept.

Referring to FIG. 1, the network system includes a plurality of host apparatuses 100-1, ..., 100-n, a communication network 10, and a plurality of network image forming apparatuses 200-1, 200-2, ..., 200-n which are connected to corresponding host apparatuses 100-1, ..., 100-n through the communication network 10. The plurality of host apparatuses are apparatuses capable of performing wired and wireless communication, such as a personal computer, a personal digital assistant (PDA), and a laptop, include at least one of a user PC and an administrator PC, and may generate a user defined color table. In addition, a driver to use the plurality of image forming apparatuses 200-1, 200-2, ..., 200-n can be installed in the plurality of host apparatuses forming apparatuses 100-1, ..., 100-n.

The plurality of image forming apparatuses 200-1, 200-2, ..., 200-n are apparatuses capable of color-printing such as a multi-functional printer, a printer, a facsimile, and the plurality of host apparatuses 100-1, ..., 100-n may share the plurality of image forming apparatuses 200-1, 200-2, ..., 200-n. There may be only one of the plurality of image forming apparatuses 200-1, 200-2, ..., 200-n.

Each image forming apparatus 200-1, 200-2, ..., 200-n stores one or more initial color tables to color-print a document input from the plurality of host apparatuses 100-1, ..., 100-n. In addition, the plurality of host apparatuses 100-1, ..., 100-n may generate a user defined color table by adjusting the initial color tables using a color adjustment program installed in the plurality of host apparatuses 100-1, ..., 100-n.

The color adjustment program is a software program to create a color table a user or an administrator prefers, and may be installed in all of the plurality of host apparatuses 100-1, ..., 100-n or in at least one of the host apparatuses which can be applied as an administration, such as the first host apparatus 100-1. The user defined color table can be generated considering the preference of the user or the administrator. Hereinafter, the user defined color table generated considering the preference of the user will be taken as an example.

The generated user defined color table is stored in an image forming apparatus storing the initial color table (for example, the first image forming apparatus 200-1), and the plurality of host apparatuses 100-1, ..., 100-n may color-print a document using the user defined color table stored in the first image forming apparatus 200-1. Accordingly, if a document requiring the same color such as in a company logo is requested from the plurality of host apparatuses 100-1, ..., 100-n, color uniformity may be achieved.

Hereinafter, the first host apparatus 100-1 and the first image forming apparatus 200-1 will be taken as an example.

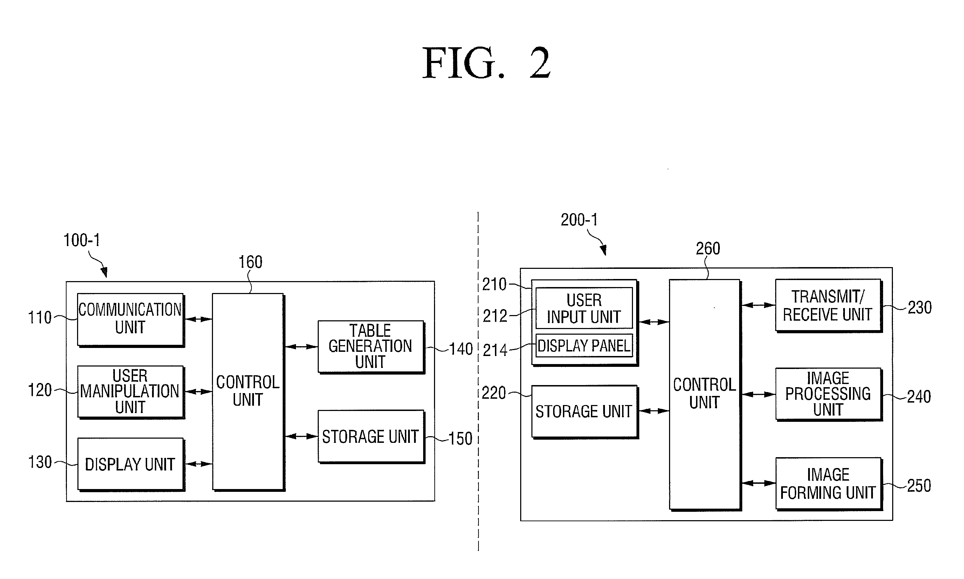

FIG. 2 is a block diagram illustrating the first host apparatus and the first image forming apparatus according to an exemplary embodiment of the present general inventive concept.

Referring to FIG. 2, the first host apparatus 100-1 includes a communication unit 110, a user manipulation unit 120, a display unit 130, a table generation unit 140, a storage unit 150 and a control unit 160.

The communication unit 110 is communicably connected to the plurality of host apparatuses 100-2, ..., 100-n or the plurality of image forming apparatuses 200-1, 200-2, ..., 200-n via the communication network 10. In particular, the communication unit 110 requests an initial color table from the first image forming apparatus 200-1 and then receives the initial color table based on the request, and transmits a user defined color table generated based on the initial color table to the first image forming apparatus 200-1.

The user manipulation unit 120 can select, set, and request functions supported by the first host apparatus 100-1 according to user's manipulation, and may include a plurality of text and number input buttons and function keys, or may be implemented in the form of a mouse to generate a user input signal. The control unit 160 generates a control signal corresponding to a UI 300 according to the user input signal.

The display unit 130 displays an image corresponding to the UI 300 including a color adjustment tool to write a user defined table according to the control signal if a user requests to execute a color adjustment program stored in the storage unit 150.

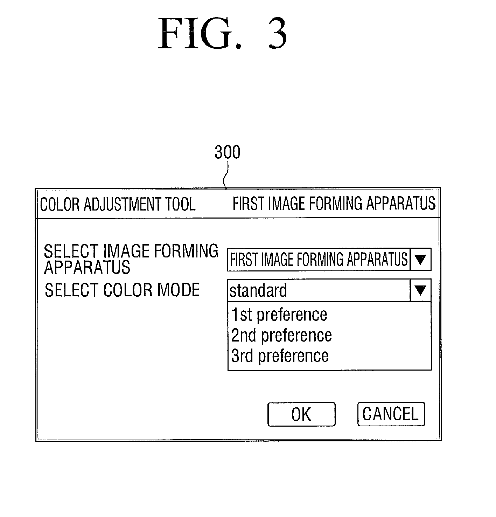

The table generation unit 140 generates the UI 300 including a color adjustment tool by driving a color adjustment program according to a user's request. If the user selects an image forming apparatus on the UI 300 displayed on the display unit 130, the communication unit 110 receives a color mode list from the selected image forming apparatus. The table generation unit 140 generates a UI displaying the received color mode list, and the user selects a color mode that he or she wants. In the case of the UI 300 illustrated in FIG. 3, the user selected the first image forming apparatus 200-1 and a standard mode.

If the first host apparatus 100-1 pre-stores a color mode supported by the first image forming apparatus 200-1, the table generation unit 140 may load and display a color mode list of the first image forming apparatus 200-1 stored in the storage unit 150.

The initial color table corresponding to the selected color mode is transmitted from the first image forming apparatus 200-1, and the table generation unit 140 generates a UI including an initial color table and a color adjustment tool. If the initial color table is displayed on the display unit 130 via the UI, a user can change the properties of various colors such as gradation, brightness, and saturation of the initial color table using color adjustment function provided by the color adjustment tool.

The table generation unit 140 generates a user defined color table from the initial color table based on the values the user changed. The user may create a plurality of user defined color tables based on the received initial color table.

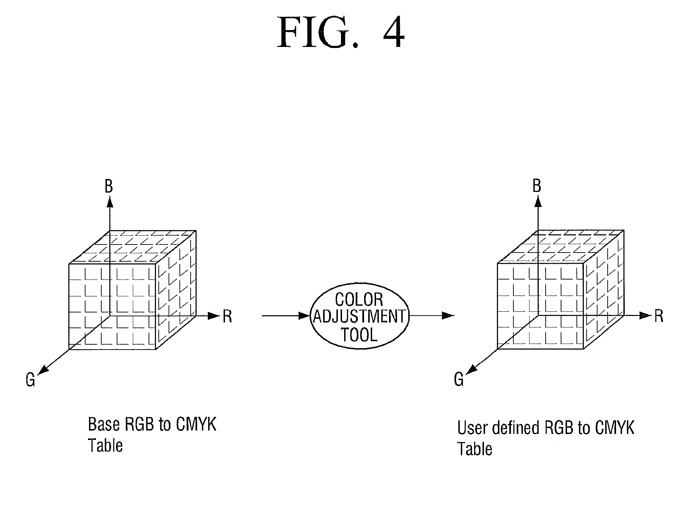

The user defined color table determines colors for printing documents, and is used to change color information, such as RGB, for a host apparatus into color information, such as CMYK, for an image forming apparatus as illustrated in FIG. 4. An example may include a RGB to CMYK Table. Referring to FIG. 4, a user changes a Base RGB to CMYK Table, which means an initial color table to a User Defined RGB to CMYK Table, which means a user defined color table by adjusting a User Input From Color Adjust Tool.

The table generation unit 140 may generate a user defined color table using color information defined in a standard format such as an International Color Consortium (ICC) profile or a color lookup table defined by a manufacturer of an image forming apparatus or the first host apparatus 100-1.

The storage unit 150 stores various programs, operating systems, color adjustment programs to operate the first host apparatus 100-1 and various data being produced while the first host apparatus 100-1 is in operation. In addition, the storage unit 150 may temporarily or permanently store the initial color table received via the communication unit 110 and a user defined color table generated from the initial color table. The storage unit 150 may also store a plurality of color mode lists supported by each image forming apparatus 200-1, 200-2, ..., 200-n.

The control unit 160 controls comprehensive operation of the first host apparatus 100-1 using various programs stored. The control unit controls the table generation unit 140 to generate a UI for generating a user defined color table by driving a color adjustment program. In particular, if a desired image forming apparatus and a color mode is selected on the UI 300 as illustrated in FIG. 3, the control unit 160 controls the communication unit 110 so that an initial color table corresponding to the selected color mode can be received from the image forming apparatus.

The control unit 160 controls the table generation unit 140 to generate a UI to generate a user defined color table based on the received initial color table. In addition, the control unit 160 controls the communication unit 110 to transmit the generated user defined color table to the selected image forming apparatus (for instance, the first image forming apparatus 200-1).

Since the initial color table is device-dependent, an initial color table having different values for each device such as a printer may be used, and creating a user defined table based on the initial color table of each device may provide the function of color adjustment. In order to resolve the above issues, the first host apparatus 100-1 generates a user defined color table based on the initial color table stored in the selected image forming apparatus. The first host apparatus 100-1 may also generate a user defined color table using the initial color table provided by a website of the manufacturer of the first image forming apparatus 200-1 or the initial color table provided by the installation driver CD of the first image forming apparatus 200-1.

Referring to FIG. 2 again, the first image forming apparatus 200-1 includes an operation panel unit 210, a storage unit 220, a transmit/receive unit 230, an image processing unit 240, an image forming unit 250 and a control unit 260. The second to the nth image forming apparatus 200-2, ..., 200-n may be similar or identical with the first image forming apparatus 200-1, and thus explanation regarding the second to the nth image forming apparatus 200-2, ..., 200-n will be omitted.

The operation panel unit 210 includes a user input unit 212 and a display panel 214. The user input unit 212 receives a user's command and request it to the control unit 260. The user requests a function that he or she wants by manipulating a plurality of function keys or a touch screen in the user input unit 212.

For instance, the user input unit 212 may select a desired table from among a plurality of user defined color tables stored in the storage unit 220. In addition, the user may make a request to display the user defined table list stored in the first area by manipulating the user input unit 212 and may delete a user defined table from the displayed user defined table list.

The display panel 214 displays the state of the first image forming apparatus 200-1 under the control of the control unit 260.

The transmit/receive unit 230 is communicably connected to the plurality of host apparatuses 100-1, ..., 100-n or the plurality of image forming apparatuses 200-1, 200-2, ..., 200-n wired or wirelessly. If a request is received from the first host apparatus 100-1, the transmit/receive unit 230 transmits the initial color table list stored in the storage unit 220 to the first host apparatus 100-1, and the initial color table selected by the first host apparatus 100-1 from the list to the first host apparatus 100-1. In addition, the transmit/receive unit 230 receives one of the plurality of host apparatuses 100-1, ..., 100-n, for instance, a user defined color table from the first host apparatus 100-1.

The storage unit 220 stores various programs to perform the function of the first image forming apparatus 200-1, various data produced while the first image forming apparatus 200-1 is in operation, more than one initial color table, more than one user defined color table, so that a plurality of host apparatuses 100-1, ..., 100-n can share and use the user defined color table.

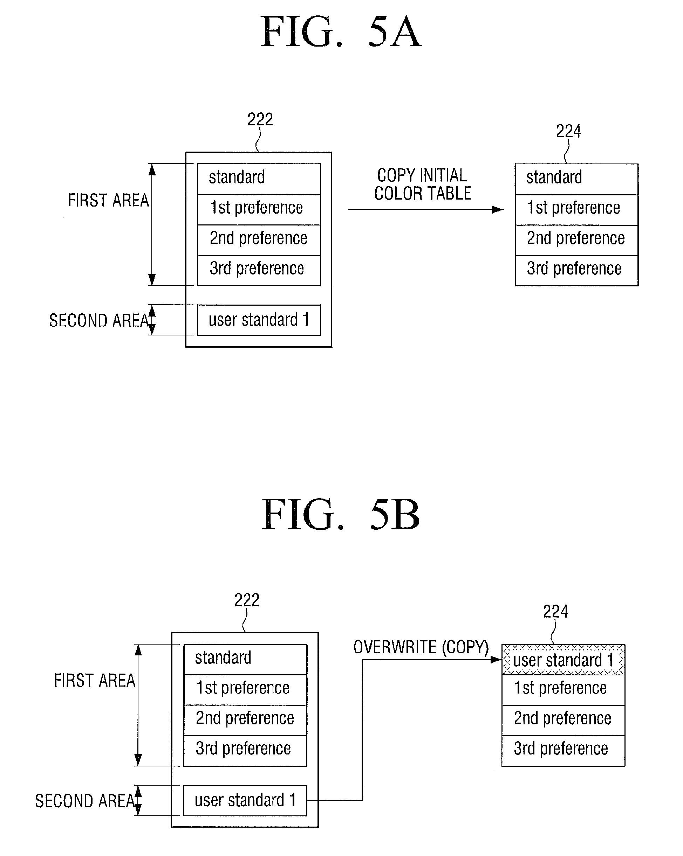

FIG. 5A is a view provided to explain the storage unit illustrated in FIG. 2.

Referring to FIG. 5A, the storage unit 220 includes a first memory area 222 and a second memory area 224. The first memory area 222 and the second memory area 224 may be storage media different from each other. The first memory area 222 may be a non-volatile memory area and the second memory area 224 may be volatile memory area. The first memory area 222 and the second memory area 224 may be identical storage media with a different storage area.

Various storage media such as ROM, RAM, FLASH MEMORY, HDD may be used for the first memory area 222 and the second memory area 224. A user defined color table can be stored in a mobile memory such as a memory card and a memory stick.

As illustrated in FIG. 5A, the first memory area 222 includes the first area to store a plurality of initial color tables (a standard table, the first preference table, the second preference table, and the third preference table) and the second area to store more than one user defined table.

If power source is turned on or a certain command occurs, the plurality of initial color tables stored in the first area of the first memory area 222 is copied to the second memory area 224. The user defined color table stored in the second area of the first memory area 222 is copied and the initial color table of the second memory area 224 is overwritten by the user defined color table.

The initial color table may be used to convert input images transmitted from the plurality of host apparatuses 100-1, ..., 100-n to a color format of output images, and may be created by each manufacturer or may adopt an international standard table. The initial color table may be stored for each color mode. For example, various color modes representing various ways of expressing colors may include a reference mode, a first preference mode, a second preference mode, and a third preference mode. Those skilled in the art will appreciate that these modes are only examples of the various modes that may be provided, and other modes can be added according to the properties of colors without departing from the principles and spirit of the present general inventive concept. Each mode can correspond to the standard table, the first preference table, the second preference table, and the third preference table.

The user defined color table may be created from one of the plurality of host apparatuses 100-1, ..., 100-n based on the initial color table, and a plurality of user defined color tables may be created from a single initial color table. FIG. 5A is a view illustrating a user defined color table (user standard 1) created and stored based on a standard table. The standard table is an initial color table corresponding to a standard mode.

The user defined color table (user standard 1) generated by the first host apparatus 100-1 is downloaded via the transmit/receive unit 230 and is stored in the first memory area 222. The user defined color table (user standard 1) stored in the first memory area 222 is stored in the second memory area 224 under the control of the control unit 260. For example, a reference table from among the plurality of initial tables stored in the second memory area 224 may be overwritten by the user defined table (user standard 1) of the first memory area 222 as illustrated in FIG. 5B.

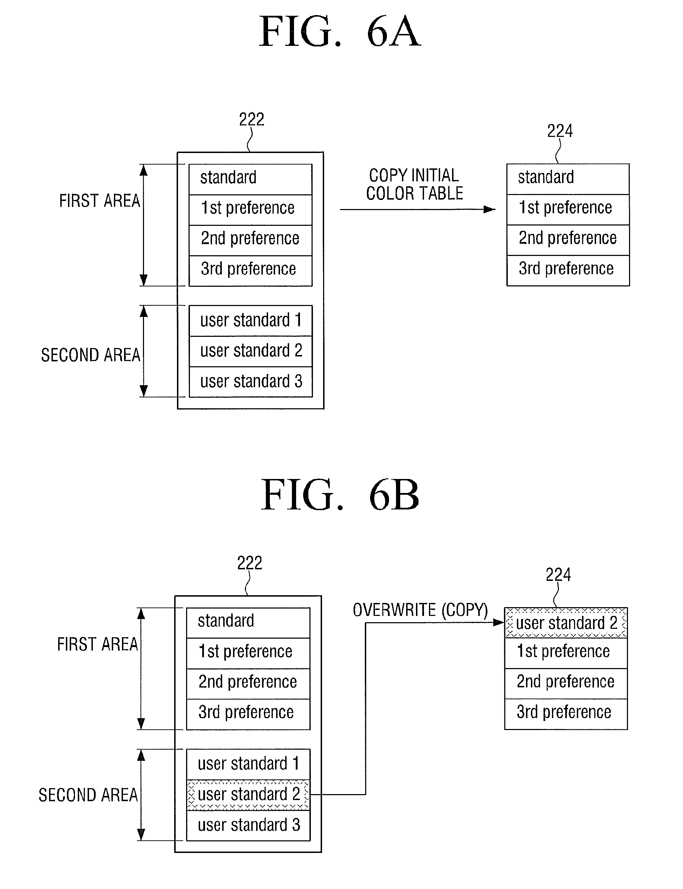

FIG. 6A is a view illustrating an example of storing a plurality of user defined color tables in the storage unit. Referring to FIG. 6A, the first host apparatus 100-1 generates a plurality of user defined color tables (user standard 1, user standard 2, and user standard 3) based on the reference table stored in the first image forming apparatus 200-1, and the plurality of generated user defined color tables (user standard 1, user standard 2, and user standard 3) are stored in the second area of the first memory area 222 of the storage unit 220.

When a user makes a request to display a list of the user defined tables (user standard 1, user standard 2, user standard 3) stored in the second area by manipulating the user input unit 212, the user may select a user defined table from the displayed list of the user defined tables, and the standard table of the second memory area 224 can be overwritten by the selected user defined table such as a user standard 2, as illustrated in FIG. 6B.

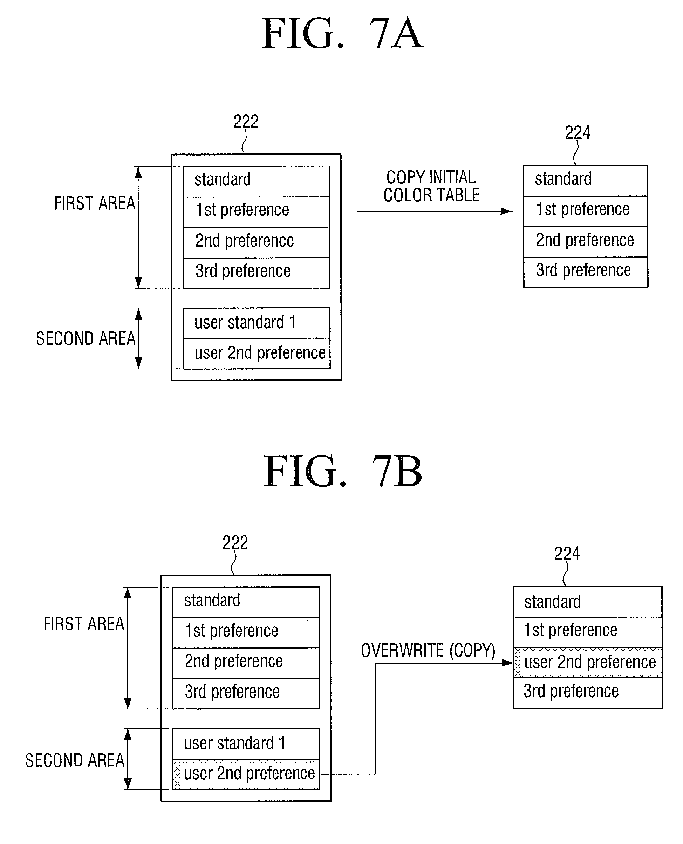

FIG. 7A is a view illustrating another example of storing a plurality of user defined color tables in the storage unit in accordance with another example embodiment of the present general inventive concept. Referring to FIG. 7A, the first host apparatus 100-1 generates each user defined color tables (user standard1, user 2nd preference) based on the standard table and the second preference table stored in the first image forming apparatus 200-1, and the generated plurality of user defined color tables (user standard1, user 2nd preference) are stored in the second area of the first memory area 222 of the storage unit 220.

The second preference table is an initial color table corresponding to the second preference mode and is stored in the first area of the first memory area 222. A user may select a user defined color table from among the plurality of user defined color tables (user standard 1, user 2nd preference) stored in the second area, and the second preference table of the second memory area 224 is overwritten by the selected user defined table such as a user second preference 1, as illustrated in FIG. 7B.

Referring to FIG. 5 again, the image processing unit 240 outputs binary data by applying a rendering process to the document transmitted from one of the plurality of host apparatuses 100-1, ..., 100-n, and includes more than one emulator (not illustrated) for this. For instance, if the document transmitted from the first host apparatus 100-1 is post script (PS) data or printer control language (PCL) data, the image processing unit 240 creates binary data using an emulator corresponding to the PS data or the PCL data. In this case, the image processing unit 240 performs color conversion and half-toning, and for the color conversion, a user may use one of a user defined color tables pre-stored in the storage unit 220 and an initial color table, or a default color table among them.

The image forming unit 250 forms an image by generating image data of a document. For instance, if the image forming unit 250 has a scanner (not illustrated), a printing engine unit (not illustrated), or a modem (not illustrated), the image forming unit 250 scans the document, prints the document, copies the document, and/or performs fax transmitting/receiving of a document.

The control unit 260 can control comprehensive operation of the first image forming apparatus 200-1 according to a stored control program. If one of the plurality of host apparatuses 100-1, ..., 100-n, for instance the first host apparatus 100-1, makes a request to transmit an initial color table corresponding to a certain color mode, the control unit 260 reads out the requested initial color table from the first memory area 222 and controls the transmit/receive unit 230 to transmit the initial color table to the first host apparatus 100-1.

If the user defined color table generated based on the initial color table is received from the first host apparatus 100-1, the control unit 260 stores the received user defined color table in the first memory area 222. If only one user defined color table is received, the control unit 260 stores the user defined color table as illustrated in FIG. 5A, and if a plurality of user defined color tables are received, the user defined color tables are stored as illustrated in FIG. 6A or FIG. 7A.

If a certain command is received, the control unit 260 copies the initial color tables stored in the first memory area 222 and stores them in the second memory area 224. The control unit 260 may also copy the user defined color table stored in the first memory area 222 and may overwrite them on a corresponding area of the second memory area 224 as illustrated in FIG. 5B, FIG. 6B, or FIG. 7B.

In this case, if a plurality of user defined color tables are stored in the first memory area 222 as illustrated in FIG. 6A or FIG. 7A, the control unit 260 can overwrite more than one pre-selected user defined color table from among the plurality of user defined color tables in the second memory area 224. The user defined color table may be pre-selected from the plurality of host apparatuses 100-1, ..., 100-n or the first image forming apparatus 200-1.

As illustrated in FIG. 7A, if a user defined color table corresponding to a different color mode that is user standard 1 and user second preference are stored in the first memory area 222, the control unit 260 may overwrite the two user defined color tables (user standard 1 and user second preference) in the second memory area 224.

The above command can occur if power source of the first image forming apparatus 200-1 is turned on and booted, if a new user defined color table is received from one of the plurality of host apparatuses 100-1, ..., 100-n, if one of the plurality of host apparatuses 100-1, ..., 100-n makes a request for printing a document, if a user defined color table stored in the first memory area 222 is deleted, or if a user defined color table stored in the first memory area 222 is selected again.

The control unit 260 may generate a list of the user defined color tables stored in the first memory area 222 in the display panel 214 according to a request from the user input unit 212. If a user selects a user defined color table from the list displayed on the display panel 214, the control unit 260 may copy the selected user defined color table and overwrite it in a corresponding area in the second memory area 224 as illustrated in FIG. 5B, FIG. 6B, and FIG. 7B.

If at least one of the host apparatuses 100-1, ..., 100-n requests a printing job without selecting a color table, the control unit 260 performs the printing job using the user defined color table stored in the first image forming apparatus 200-1. For example, if the first host apparatus 100-1 requests document work, the control unit 260 controls the image processing unit 240 and the image forming unit 250 to print the document using a user defined color table overwritten in the second memory area 224. The document work includes color-printing, color-scanning, color-copying, and transmitting color faxes. That is, document work includes generating/processing/forming/printing/editing/transmitting of an image corresponding to a document which is scanned/formed/generated/transmitted.

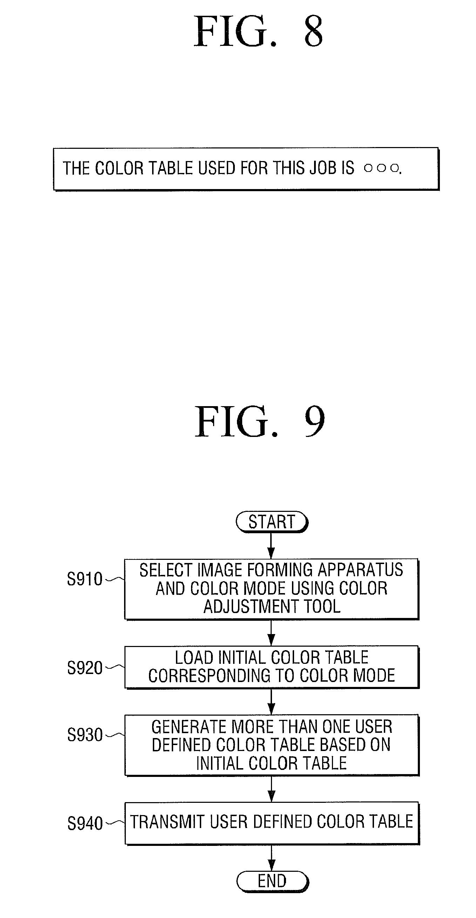

If the work is completed, the control unit 260 generates a message informing the user of a color table used for the work and displays it on the display panel 214. For instance, the control unit 260 may create and display a message, 'The color table used for this job is a ooo', as illustrated in FIG. 8. The message may be displayed both when a desired color table is selected and when a desired color table is not selected upon receiving a request from a host.

FIG. 9 is a flow chart provided to explain a method of generating a user defined color table in the first host apparatus according to an exemplary embodiment of the present general inventive concept.

Referring to FIG. 1 to FIG. 9, a user selects an image forming apparatus to be used and one of color modes provided by the image forming apparatus using a UI as illustrated in FIG. 3 (S910). Hereinafter, the first image forming apparatus 200-1 will be taken as an example of an image forming apparatus selected in S910, and a standard mode will be taken as an example of a selected color mode.

The control unit 160 loads an initial color table corresponding to the color mode selected in S910, and controls the display unit 130 to display the loaded initial color table and a color adjustment tool (S920). The initial color table may be loaded from the first host apparatus 100-1, the first image forming apparatus 200-1, or a web server (not illustrated) of the manufacturer of the first image forming apparatus 200-1.

If a user generates a user defined color table based on the initial color table by manipulating the displayed color adjustment tool (S930), the control unit 160 controls the communication unit 110 to transmit the generated user defined color table to the first image forming apparatus 200-1 (S940). The user may generate a plurality of user defined color tables from a single initial color table in S930 and S940 and transmit them.

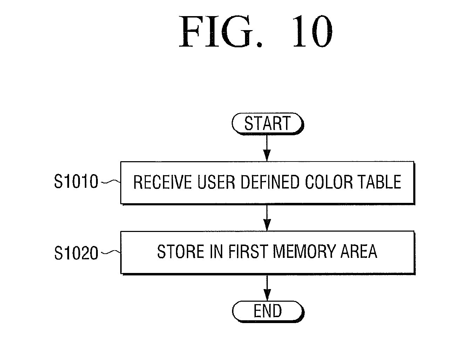

FIG. 10 to FIG. 12 are flow charts illustrating a method of controlling printing of the network image forming apparatus according to an exemplary embodiment of the present general inventive concept. In order to explain the network image forming apparatus with reference to FIG. 10 to FIG. 12, the first image forming apparatus 200-1 selected in S910 in FIG. 9 will be taken as an example.

FIG. 10 is a flow chart illustrating receiving a user defined color table, and the transmit/receive unit 230 receives the user defined color table transmitted from the first host apparatus 100-1 (S1010).

The control unit 260 stores the received user defined color table in the first memory area 222 (S1020). Accordingly, more than one user defined color table generated by a user or an administrator in a host apparatus can be downloaded and stored in the network image forming apparatus.

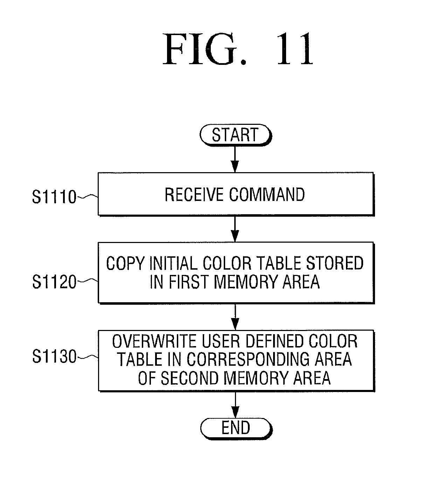

FIG. 11 is a flow chart regarding management of a user defined color table. If the control unit 260 receives a certain command described with reference to FIG. 5 (S1110), the control unit 260 copies the initial color tables stored in the first memory area 222 to the second memory area 224 and stores them (S1120). The certain command can occur, for example, if power source of the image forming apparatus is turned on and booted, if a new user defined color table is received from a host apparatus, if a host apparatus makes a request for printing a document, if a user defined color table stored in the first memory area 222 is deleted, or if a user defined color table stored in the first memory area 222 is selected again. Before copying the initial color tables stored in the first memory area 222 to the second memory area 224, the control unit 260 may clear the second memory area.

The control unit 260 overwrites the user defined color table stored in the first memory area 222 in S1020 in a corresponding area from among the initial color tables copied to the second memory area 224 (S1130). Accordingly, a memory setting of a user defined color table used for the document work is completed.

If a user's certain command occurs as the user defined color table stored in the first memory area is deleted, no user defined color table may exist in the first memory area 222. Therefore, the control unit 260 may not perform operation S1030. If a plurality of user defined color tables exist and only part of the user defined color tables are deleted as illustrated in FIG. 6A to FIG. 7B, the control unit 260 may overwrite the user defined color table selected by the user in a corresponding area of the second memory area 224.

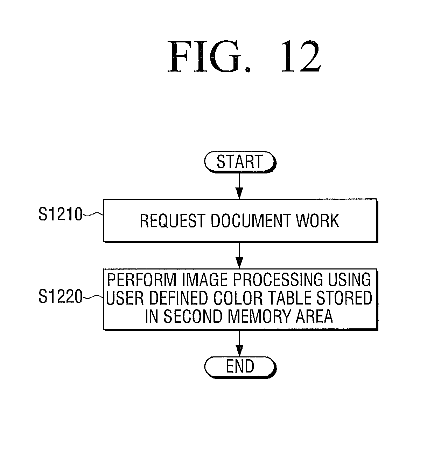

FIG. 12 is a flow chart regarding usage of a user defined color table. If at least one host apparatus 100-1, ..., 100-n makes a request for a document work (S1210), the control unit 260 controls the image processing unit 240 and the image forming apparatus 250 to perform image processing using a user defined color table stored in the second memory area 224 (S1220).

According to an exemplary embodiment of the present general inventive concept, if a user does not like colors output from the driver of an image forming apparatus, the user may adjust colors directly. In particular, a color adjusted by a user can be stored in the image forming apparatus and can be shared by a plurality of users, that is, a plurality of host apparatuses. Accordingly, if each host apparatus makes a request for a document work, identical colors which are adjusted consistently may be used, producing uniform documents. In addition, if certain customers or users do not like the color properties set by a particular manufacturer, the manufacturer may produce a different color table for each customer and may provide them to each customer. In addition, since customers can produce a color table from the initial color table stored in the image forming apparatus, customer satisfaction may be enhanced.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. A method of controlling printing of a network image forming apparatus connectable to at least one host apparatus, comprising:
receiving a user defined color table generated using the at least one host apparatus;
storing the received user defined color table in the network image forming apparatus so that the received user defined color table can be shared by the at least one host apparatus; and
performing a printing job using the stored user defined color table.

2. The method of claim 1, further comprising:
generating the user defined color table from the at least one host apparatus according to a user's request; and
transmitting the generated user defined color table to the network image forming apparatus.

3. The method of claim 1, wherein the storing operation comprises:
storing the received user defined color table in a first memory of the network image forming apparatus;
receiving a command to store the user defined color table stored in the first memory area in a second memory area of the network image forming apparatus; and
storing the user defined color table stored in the first memory area in the second memory area.

4. The method of claim 3, wherein the command occurs if the network image forming apparatus is booted, if the new user defined color table is received, or if the at least one host apparatus makes a request for the printing job.

5. The method of claim 3, further comprising:
initializing the second memory area if a user defined color table stored in the first memory area is deleted;
storing an initial color table pre-stored in the first memory area in the second memory area; and
performing the printing job using an initial color table stored in the second memory area.

6. The method of claim 1, wherein the user defined color table is generated using an initial color table pre-stored in the network image forming apparatus or a separate color table.

7. The method of claim 1, wherein if the at least one host does not select a separate color table, the printing job is performed using the user defined color table stored in the network image forming apparatus.

8. The method of claim 1, wherein the printing job includes at least one of color-printing, color-scanning, color-copying, and transmitting color faxes.

9. A network image forming apparatus connectable to at least one host apparatus, comprising:
a receiving unit to receive a user defined color table generated using the at least one host apparatus; and
a storage unit to store the received user defined color table such that the received user defined color table is shared by the at least one host apparatus;
wherein a printing job is performed using the stored user defined color table.

10. The network image forming apparatus of claim 9, wherein the at least one host apparatus comprises:
a table generation unit to generate the user defined color table from the at least one host apparatus according to a user's request; and
a communication unit to transmit the generated user defined color table to the network image forming apparatus.

11. The network image forming apparatus of claim 9, further comprising:
a control unit to store the received user defined color table in the first memory area of the storage unit and to store the user defined color table stored in the first memory area in the second memory are of the storage unit according to a command.

12. The network image forming apparatus of claim 9, wherein the user defined color table is generated using an initial color table pre-stored in the network image forming apparatus or a separate color table.

13. The network image forming apparatus of claim 9, wherein if the at least one host does not select a separate color table, the printing job is performed using the user defined color table stored in the network image forming apparatus.

14. A host apparatus, comprising:
a table generation unit to generate a user defined color table using an initial color table stored in a network image forming apparatus; and
a communication unit to transmit the generated table to the network image forming apparatus.

15. The host apparatus of claim 14, further comprising:
a user manipulation unit to select the user defined color table stored in the network image forming apparatus and to make a request for document work.
